# FASCICULE DE BREVET EUROPEEN

(11) **EP 3 660 954 B1**
(45) Date de publication et mention de la délivrance du brevet: **24.01.2024**
(21) Numéro de dépôt: 19212644.9
(22) Date de dépôt: 29.11.2019
(51) Int. Cl.: H01M 4/04, H01M 4/131, H01M 4/1391, H01M 4/62, H01M 4/66, H01M 10/0525, H01M 4/02

(54) **CATHODE POUR ACCUMULATEUR ÉLECTROCHIMIQUE, ACCUMULATEUR, DISPOSITIF DE STOCKAGE D'ÉNERGIE ET PROCÉDÉ DE FABRICATION ASSOCIÉS**
KATHODE FÜR ELEKTROCHEMISCHEN AKKUMULATOR UND ZUGEHÖRIGEN AKKUMULATOR, ENERGIESPEICHERGERÄT UND HERSTELLUNGSMETHODE
CATHODE FOR ELECTROCHEMICAL ACCUMULATOR AND ASSOCIATED ACCUMULATOR, ENERGY STORAGE DEVICE AND MANUFACTURING METHOD

(30) Priorité: 29.11.2018 FR 1872042
(43) Date de publication de la demande: 03.06.2020
(73) Titulaire: ARMOR BATTERY FILMS, 44100 Nantes (FR)
(72) Inventeur: GUICHARD, Pierre, 44400 REZE (FR); BLIN, Marie-Anne, 44700 ORVAULT (FR)
(74) Mandataire: Lavoix

(56) Documents cités:
- WO-A1-2018/180742
- US-A1- 2013 209 889
- US-A1- 2013 316 232
- US-A1- 2014 072 873
- US-A1- 2015 214 552
- US-A1- 2018 183 047

## Description

### DOMAINE TECHNIQUE DE L'INVENTION

La présente invention concerne une cathode réalisée par dépôt d'une composition de cathode de nature alcaline. La présente invention porte aussi sur un accumulateur électrochimique et à un dispositif de stockage d'énergie comportant la cathode précédente. La présente invention concerne également un procédé de fabrication de la cathode précédente.

### ARRIERE-PLAN DE L'INVENTION

Un accumulateur électrochimique comprend classiquement une électrode positive, une électrode négative, un électrolyte et des collecteurs de courant pour chaque électrode. L'ensemble d'une électrode négative et d'un collecteur de courant forme une anode tandis que l'ensemble d'une électrode positive et d'un collecteur de courant forme une cathode.

Le principe de fonctionnement de tels accumulateurs se base sur le stockage réversible de l'énergie électrique en énergie chimique par la mise en oeuvre de deux réactions électrochimiques séparées et couplées. Les électrodes positive et négative baignent dans l'électrolyte et sont le siège des réactions électrochimiques, dites faradiques. Les électrodes sont notamment réalisées en des matériaux actifs permettant de stocker et de déstocker les ions via des réactions d'oxydation et de réduction.

Les électrodes sont réalisées par dépôt d'une composition, la composition comportant principalement un ou plusieurs matériau(x) actif(s), des particules conductrices assurant un bon transport des électrons vers l'ensemble des matériaux actifs et un liant qui permet d'assurer la cohésion des particules et l'adhésion au substrat.

Ensuite, les deux électrodes, positives et négatives, sont reliées ioniquement par un électrolyte pouvant être liquide, sous forme de gel ou encore solide. Au cours de la décharge, le matériau actif à l'électrode négative s'oxyde et libère d'une part des électrons qui sont acheminés par l'intermédiaire du collecteur de courant vers le circuit extérieur et d'autre part des cations qui migrent au travers de l'électrolyte vers l'électrode positive. Ensuite, les électrons et les cations sont captés par le matériau actif à l'électrode positive qui se réduit.

Traditionnellement, la composition est une dispersion à base d'un solvant organique, aussi appelée base organique, tel que le N-méthylpyrrolidone, aussi désigné par l'acronyme NMP. Le liant, typiquement le fluorure de polyvinylidène (ou PVDF), est dissous dans le solvant. Les particules conductrices et les matériaux actifs sont mis en suspension dans la solution.

Les compositions à base d'un mélange de NMP et de PVDF présentent de bonnes propriétés visco-mécaniques qui permettent l'enduction à échelle industrielle à une vitesse d'enduction élevée.

Toutefois, les procédés de fabrication industrielle des électrodes à base organique présentent également de nombreux désavantages, dont leur coût qui est élevé. Par ailleurs, les solvants organiques présentent une température de vaporisation élevée et l'élimination du solvant lors du séchage de l'électrode se fait donc à une température élevée, typiquement à 120°C dans le cas du NMP. En outre, l'utilisation de solvants organiques oblige la mise en place de procédés de recyclage complexes et coûteux, auxquels s'ajoute le besoin de mettre en place des mesures de protection spécifiques en raison des risques d'inflammabilité et d'explosion de tels solvants.

US 2015/214552 décrit une cathode de batterie au lithium comprenant un collecteur de courant formé d'un substrat métallique et d'une couche conductrice protectrice peouvant comprendre un matériau à base de carbone, et une électrode.

US 2014/072873 concerne une cathode de batterie Li-S comprenant un collecteur de courant, une couche d'interfaçage enduite sur le collecteur de courant et pouvant comprendre un polymère comprenant des groupes fonctionnels hydroxyle, et une électrode.

US 2013/209889 décrit une cathode de batterie lithium ion comprenant un collecteur de courant, une couche d'interfaçage enduite sur le collecteur de courant, comprenant des particules conductrices et un liant, et une électrode.

US 2018/183047 concerne un procédé de fabrication d'une composition de cathode pour batterie au lithium, la composition de cathode étant directement déposée sur un collecteur de courant en aluminium, sans couche d'interfaçage.

WO 2018/180742 décrit une cathode comportant un collecteur de courant, une couche d'interfaçage enduite sur le collecteur de courant et une électrode, l'électrode étant formée par dépôt d'une première composition à base de lithium et la couche d'interfaçage est formée d'une deuxième composition comprenant un deuxième matériau liant et d'un deuxième additif conducteur.

US 2013/316232 concerne une cathode comportant un collecteur de courant, une couche d'interfaçage enduite sur le collecteur de courant et une électrode. La couche d'interfaçage est formée d'une deuxième composition comprenant un deuxième matériau liant et un deuxième additif conducteur, le deuxième matériau liant comprenant un composé formé par un copolymère éthylène-alcool vinylique seul ou en mélange avec un alcool polyvinylique.

### RESUME DE L'INVENTION

Il existe donc un besoin pour une cathode dont la fabrication est de mise en oeuvre plus simple, et en particulier une cathode qui permette une fabrication plus facile et plus rapide.

A cet effet, il est proposé une cathode pour accumulateur électrochimique comportant un collecteur de courant, une couche d'interfaçage, la couche d'interfaçage étant enduite sur le collecteur de courant, et une électrode, l'électrode étant formée par dépôt, notamment par enduction, d'une première composition sur la couche d'interfaçage, la première composition présentant un potentiel hydrogène supérieur ou égal à 10, de préférence supérieur ou égal à 12, le potentiel hydrogène étant mesuré à une température de 25°C, la première composition étant une composition de cathode à base d'eau comprenant un premier matériau d'intercalation, un premier matériau liant et un premier additif conducteur, la couche d'interfaçage étant formée par dépôt, notamment par enduction, sur le collecteur de courant d'une deuxième composition, la deuxième composition comprenant un deuxième matériau liant et un deuxième additif conducteur, et le deuxième matériau liant comprenant un mélange d'un premier polymère et d'un deuxième polymère,
le premier polymère étant choisi parmi les polyimides, les polyamide-imides, les polyéther-imides, et un mélange de ceux-ci, et
le deuxième polymère étant choisi parmi la polyvinylpyrrolidone, les alcools polyvinyliques, les copolymères éthylène-alcool vinylique, l'acide polyacrylique et un mélange de ceux-ci.

Suivant des modes de réalisation particuliers, la cathode comprend une ou plusieurs des caractéristiques suivantes, prise(s) isolément ou suivant toutes les combinaisons techniquement possibles :
- le premier matériau d'intercalation est choisi parmi les oxydes de lithium-nickel-cobalt-manganèse, les oxydes de lithium-nickel-cobalt-aluminium et un mélange de ceux-ci, le premier matériau d'intercalation étant présent dans la composition sous une forme dissoute.
- le premier matériau liant est choisi parmi les acides polyacryliques, l'alcool polyvinylique, le polyvinylpyrrolidone, l'hydroxypropylcellulose, le polyuréthane, l'alginate de sodium, le styrène-butadiène et un mélange de ceux-ci.
- le deuxième matériau liant est dépourvu de polyamide.
- la couche d'interfaçage présente une épaisseur supérieure ou égale à 1 micromètre.
- la couche d'interfaçage présente une épaisseur inférieure ou égale à 4 micromètres.
- la couche d'interfaçage présente une épaisseur inférieure ou égale à 2 micromètres.
- le collecteur de courant est un feuillard métallique.
- le collecteur de courant est un feuillard en aluminium.

La présente description se rapporte également à un accumulateur électrochimique comportant une cathode telle que précédemment décrite.

La présente description décrit aussi un dispositif de stockage d'énergie comportant un ensemble d'accumulateurs, au moins un accumulateur étant un accumulateur tel que précédemment décrit.

Selon un mode de réalisation particulier, le dispositif de stockage d'énergie est une batterie.

Selon un mode de réalisation particulier, le dispositif de stockage d'énergie est une batterie lithium-ion.

La présente description se rapporte aussi à un procédé de fabrication d'une cathode pour accumulateur électrochimique comprenant une étape de préparation d'une première composition, la première composition présentant un potentiel hydrogène supérieur ou égal à 10, le potentiel hydrogène étant mesuré à une température de 25°C, une étape de dépôt, notamment par enduction, de la première composition sur un substrat formé d'un collecteur de courant et d'une couche d'interfaçage, la première composition étant déposée, notamment enduite, sur la couche d'interfaçage, la première composition étant une composition de cathode à base d'eau comprenant un premier matériau d'intercalation, un premier matériau liant et un premier additif conducteur, une étape de préparation d'une deuxième composition comprenant la mise en solution d'un deuxième matériau liant et d'un deuxième additif conducteur dans l'eau, le deuxième matériau liant comprenant un mélange d'un premier polymère et d'un deuxième polymère, le premier polymère étant choisi parmi les polyimides, les polyamide-imides, les polyéther-imides, et un mélange de ceux-ci, et le deuxième polymère étant choisi parmi la polyvinylpyrrolidone, les alcools polyvinyliques, les copolymères éthylène-alcool vinylique, l'acide polyacrylique, et un mélange de ceux-ci, et une étape de dépôt, notamment par enduction, de la deuxième composition sur le collecteur de courant pour former la couche d'interfaçage.

### BREVE DESCRIPTION DES DESSINS

D'autres caractéristiques et avantages de l'invention apparaîtront à la lecture de la description qui suit de modes de réalisation de l'invention, donnée à titre d'exemple uniquement et en référence aux dessins qui sont :
- [Fig 1] la figure 1 est une représentation schématique d'un accumulateur de batterie comportant une cathode, et
- [Fig 2] la figure 2 est une représentation schématique de côté en section de la cathode de l'accumulateur.

### DESCRIPTION DETAILLEE DE MODES DE REALISATION

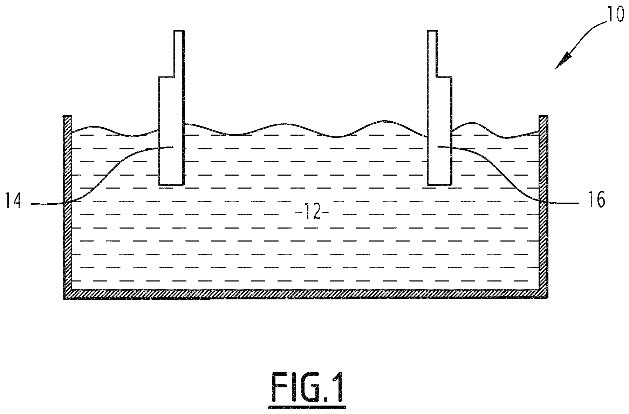

Un accumulateur 10 électrochimique est représenté sur la figure 1.

L'accumulateur 10 est destiné à être relié à d'autres accumulateurs électriques pour former un dispositif de stockage d'énergie, notamment un générateur électrique de tension et de capacité souhaitées.

Un tel générateur est appelé batterie d'accumulateurs ou plus simplement une batterie.

Selon l'exemple décrit, l'accumulateur 10 est un accumulateur lithium-ion destiné à une batterie lithium-ion.

L'accumulateur 10 utilise une technique de conversion réversible d'énergie pour stocker l'énergie et la restituer ultérieurement.

L'accumulateur 10 décrit utilisant une réaction électrochimique, l'accumulateur 10 est un accumulateur électrochimique.

L'accumulateur 10 comporte un électrolyte 12, une anode 14 et une cathode 16.

L'accumulateur 10 fonctionne comme un accumulateur électrochimique grâce à l'interaction entre l'électrolyte 12, l'anode 14 et la cathode 16.

L'électrolyte 12 est composé de différents sels ioniques apportant des ions servant aux réactions de stockage de charges ou faradique, de carbonates et d'un solvant ou mélange de solvants pour permettre la solubilisation des ions.

Les sels ioniques sont choisis parmi le hexafluorophosphate de lithium (LiPF6), le sel de lithium bis (trifluorométhane sulfonyl)imide (LiTFSI), le tetrafluoroborate de lithium (LiBF4), le bis oxalate borate de lithium (LiBOB), le lithium difluorooxalatoborate de lithium (LiDFOB) et un mélange de ceux-ci.

Les carbonates sont, par exemple, le carbonate de propylène (PC), le carbonate d'éthylène (EC), le carbonate de diméthyle (DMC), le carbonate d'éthyle méthyle (EMC) ou le carbonate de diéthyle (DEC).

On peut aussi trouver, en plus faible proportion, l'acétate de méthyle ou le formate de méthyle, l'acétonitrile, le tetrahydrofurane ou encore le gamma-butyrolactone, et des mélanges binaires ou ternaires, voire même quaternaires de ceux-ci, ainsi que des liquides ioniques.

L'anode 14 est constituée d'un matériau d'intercalation des ions comme le carbone. Le carbone est utilisé très majoritairement sous forme de microperles en mésophase, communément désignées par la dénomination anglaise « MesoCarbon MicroBeads » (MCMB), sous forme de graphites artificiels ou naturels ou des matériaux graphitiques comme le carbone doux (plus connu sous sa dénomination anglaise « soft carbon ») ou le carbone dur (plus connu sous sa dénomination anglaise « hard carbon »). En variante, le matériau d'intercalation est choisi parmi d'autres types de matériaux d'électrode négative à base de titanate lithié, comme le Li₄Ti₅O₁₂ (aussi désigné par l'acronyme LTO), ou à base de silicium, d'étain ou d'alliages.

Il est entendu par l'expression «le composé choisi parmi un composé A, un composé B et un composé C » que ledit composé est choisi dans le groupe constitué du composé A, du composé B et du composé C.

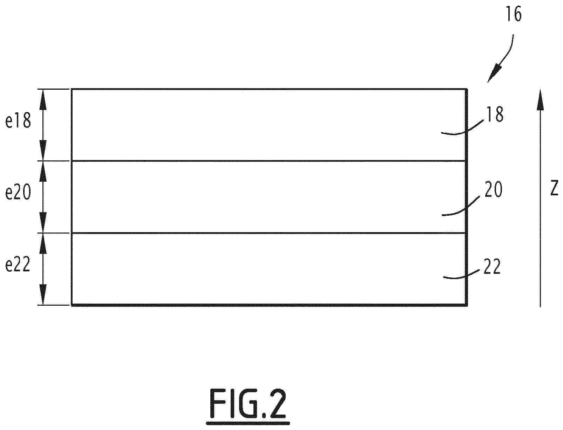

La cathode 16 est représentée plus en détail sur la figure 2.

La cathode 16 comporte une électrode 18, une couche d'interfaçage 20 et un collecteur de courant 22.

L'électrode 18, la couche d'interfaçage 20 et le collecteur de courant 22 forment un empilement de couches selon une direction d'empilement notée Z, la couche d'interfaçage 20 étant disposée entre l'électrode 18 et le collecteur de courant 22.

L'électrode 18 est en contact avec l'électrolyte 12.

L'électrode 18 présente par exemple une épaisseur e18 comprise entre 10 micromètres et 100 micromètres, l'épaisseur e18 étant mesurée selon la direction d'empilement Z.

L'électrode 18 est formée par dépôt d'une première composition C1 sur la couche d'interfaçage 20.

La première composition C1 comporte un premier matériau d'intercalation MI1, un premier matériau liant ML1, un premier additif conducteur AC1 et un premier solvant S1.

De préférence, la première composition C1 est constituée d'un premier matériau d'intercalation MI1, d'un premier matériau liant ML1, d'un premier additif conducteur AC1 et d'un premier solvant S1.

Le matériau d'intercalation est aussi désigné sous le terme « matériau actif ».

Le premier matériau d'intercalation MI1 est choisi parmi les oxydes métalliques lithiés. De préférence, le premier matériau d'intercalation MI1 est choisi parmi les oxydes de lithium-nickel-cobalt-manganèse LiNiMnCoO₂ (désigné par l'acronyme NMC), les oxydes de lithium-nickel-cobalt-aluminium ou un mélange de ceux-ci.

La première composition C1 comprend une teneur en masse comprise entre 80% et 98% en premier matériau d'intercalation MI1. De préférence, la première composition C1 comprend une teneur en masse comprise entre 91% et 95% en premier matériau d'intercalation MI1.

Pour toute la suite et sauf indication contraire, la teneur en masse d'un composé dans une composition est définie comme le rapport de la masse dudit composé sur la masse totale des composés de ladite composition, la masse du solvant étant exclue. Ladite teneur est également désignée par l'expression « teneur en masse sèche ».

Pour toute la suite, il est entendu par « une valeur est comprise entre A et B » que la valeur est supérieure ou égale à A et inférieure ou égale à B.

Avantageusement, le premier matériau d'intercalation MI1 est présent dans la première composition C1 sous une forme dissoute.

Il est entendu par cela qu'au moins 95% en masse du premier matériau d'intercalation MI1 dans la première composition C1 se trouve sous forme dissoute.

Le choix du premier matériau liant ML1 varie considérablement tant que le premier matériau liant ML1 est inerte par rapport aux autres matériaux de l'électrode 18. Le premier matériau liant ML1 est un matériau habituellement polymérique, permettant de faciliter la mise en oeuvre des électrodes lors de leur fabrication.

Le premier matériau liant ML1 est soluble dans l'eau à température ambiante. Il est entendu par « soluble dans l'eau à température ambiante » que la solubilité du premier matériau liant ML1 dans l'eau à 20°C et à une pression de 0,1 MPa est supérieure ou égale à 95% en masse.

Le premier matériau liant ML1 comprend un ou plusieurs polymères choisis parmi les polymères thermoplastiques, les polymères thermodurcissables, les élastomères et un mélange de ceux-ci.

Des exemples de polymères thermoplastiques comprennent, de manière non limitative, les polymères issus de la polymérisation de monomères vinyliques aliphatiques ou cycloaliphatiques, tels que des polyoléfines (parmi lesquels les polyéthylènes ou encore les polypropylènes), les polymères issus de la polymérisation de monomères vinyliques aromatiques, tels que les polystyrènes, les polymères issus de la polymérisation de monomères acryliques et/ou (méth)acrylates, les polyamides, les polyéthercétones, les polyimides.

Des exemples de polymères thermodurcissables comprennent, de manière non limitative des résines thermodurcissables (telles que des résines époxydes ou des résines polyesters) éventuellement en mélange avec des polyuréthanes ou avec des polyéthers polyols.

Des exemples de polymères élastomères comprennent, de manière non limitative, les caoutchoucs naturels, les caoutchoucs de synthèse, les copolymères styrène-butadiène (connus également sous l'abréviation « SBR »), les copolymères éthylène-propylène (connus également sous l'abréviation « EPM ») et les silicones.

Selon un mode de réalisation particulier, le premier matériau liant ML1 est un mélange de polymère(s) thermoplastique(s), de polymère(s) thermodurcissable(s) et/ou de polymère(s) élastomère(s).

D'autres premiers matériaux liants ML1 appropriés comprennent des polymères réticulés, tels que ceux fabriqués à partir de polymères ayant des groupes carboxyle et des agents de réticulation.

De préférence, le premier matériau liant ML1 est choisi parmi les acides polyacryliques, l'alcool polyvinylique, le polyvinylpyrrolidone, le carboxyméthylcellulose, l'hydroxypropylcellulose, le latex fluoré, le polyuréthane, l'alginate de sodium, le styrène-butadiène et un mélange de ceux-ci.

La première composition C1 comprend une teneur en masse en premier matériau liant ML1 comprise entre 1% et 10%. La teneur en masse en premier matériau liant ML1 dans la première composition C1 est de préférence inférieure ou égale à 5%. Typiquement, la première composition C1 comprend une teneur en masse en premier matériau liant ML1 comprise entre 2,5% et 5%.

Le premier additif conducteur AC1 comporte un ou plusieurs types d'éléments conducteurs pour améliorer la conductivité électronique.

Des exemples d'éléments conducteurs comprennent, de façon non limitative, les carbones conducteurs, les graphites, les graphènes, les nanotubes de carbone, les fibres de charbon actif, les nanofibres de carbone non activées, les flocons métalliques, les poudres métalliques, les fibres métalliques et les polymères électriquement conducteurs.

Une nanofibre est définie comme une fibre présentant un diamètre de dimension maximale comprise entre 1 nanomètre et 100 nanomètres et s'étendant selon une direction normale audit diamètre.

Un nanotube est défini comme un tube présentant un diamètre extérieur de dimension maximale comprise entre 1 nanomètre et 100 nanomètres et s'étendant selon une direction normale audit diamètre.

La première composition C1 comprend une teneur en masse en premier additif conducteur AC1 comprise entre 1% et 10%.

La teneur en masse en premier additif conducteur AC1 est de préférence inférieure ou égale à 4%. Par exemple, la première composition C1 comprend une teneur en masse en premier additif conducteur AC1 supérieure ou égale 2,5%.

Le premier solvant S1 est de l'eau, à l'état liquide.

Du fait de la présence du premier solvant S1, la cathode 16 est désignée sous le nom de cathode à base d'eau, ou de cathode à base aqueuse.

La première composition C1 présente un potentiel hydrogène, ou pH, supérieur ou égal à 10. Le pH est mesuré à une température de 25°C, à une pression de 0,1 MégaPascal (MPa).

Le potentiel hydrogène est une mesure de l'activité chimique des ions hydrogène en solution, notamment en solution aqueuse où ces ions forment avec l'eau les ions oxonium (aussi appelés hydronium) H₃O⁺. Le potentiel hydrogène, communément abrégé en pH, reflète l'acidité de la solution. Pour une solution aqueuse diluée, le pH est compris entre 0 et 14, les valeurs 0 et 14 étant incluses. Par exemple, dans un milieu aqueux dilué à 25°C, un pH de 7 est dit neutre, un pH strictement supérieur à 7 est dit basique (ou alcalin) et un pH strictement inférieur à 7 est dit acide.

Le pH de la composition C1 est défini comme le pH de la composition C1 au moment du dépôt de la première composition C1 sur la couche d'interfaçage 20, comme cela sera décrit plus en détail ultérieurement. Il est entendu par « au moment du dépôt » un laps de temps inférieur ou égal à une minute avant le début du dépôt. Aucun composé n'est ajouté à la première composition C1 au cours de ce laps de temps.

De préférence, la première composition C1 présente un pH supérieur ou égal à 12.

L'électrode 18 est disposée sur la couche d'interfaçage 20.

La couche d'interfaçage 20 présente une épaisseur e20 inférieure ou égale à 5 micromètres, l'épaisseur e20 étant mesurée selon la direction d'empilement Z.

De préférence, la couche d'interfaçage 20 présente une épaisseur e20 supérieure ou égale à 10 nanomètres. Avantageusement, la couche d'interfaçage 20 présente une épaisseur e20 comprise entre 500 nanomètres et 2 micromètres.

La couche d'interfaçage 20 est réalisée par dépôt d'une deuxième composition C2 sur le collecteur de courant 22.

La deuxième composition C2 comporte un deuxième matériau liant ML2 et un deuxième additif conducteur AC2. Avantageusement, la deuxième composition C2 consiste en un deuxième matériau liant ML2, un deuxième additif conducteur AC2 et un deuxième solvant S2.

Il est à noter que le deuxième matériau liant ML2 est dépourvu de polyamide.

Selon l'invention, le deuxième matériau liant ML2 comprend un mélange d'un premier polymère et d'un deuxième polymère.

Le premier polymère est choisi parmi les polyimides, les polyamide-imides, les polyéther-imides, et un mélange de ceux-ci.

Le deuxième polymère est choisi parmi la polyvinylpyrrolidone, les alcools polyvinyliques (aussi désignés par l'acronyme PVA), les copolymères éthylène-alcool vinylique (aussi désigné par l'acronyme EVOH), l'acide polyacrylique, et un mélange de ceux-ci.

Avantageusement, le deuxième matériau liant ML2 comprend un mélange d'un polymère de la famille des polyimides avec un copolymère éthylène-alcool vinylique ou un mélange d'un polymère de la famille des polyimides avec un alcool polyvinylique.

Il est entendu par « un polymère de la famille des polyimides » un polymère choisi parmi les polyimides, les polyamides-imides et les polyéther-imides.

De préférence, le deuxième matériau liant ML2 comprend un mélange du premier polymère et du deuxième polymère tels que définis précédemment, la teneur en masse du premier polymère dans le deuxième matériau liant ML2 étant supérieure ou égale à 20%, de préférence supérieure ou égale à 40% et inférieure ou égale à 80%.

Le deuxième matériau liant ML2 est amorphe, semi-cristallin ou cristallin.

La deuxième composition C2 comprend une teneur en masse en deuxième matériau liant ML2 supérieure ou égale à 20%.

La teneur en masse en deuxième matériau liant ML2 dans la deuxième composition C2 est de préférence inférieure ou égale à 80%. Par exemple, la deuxième composition C2 comprend une teneur en masse en deuxième matériau liant ML2 comprise entre 40% et 70%.

Le deuxième additif conducteur AC2 comporte un ou plusieurs éléments conducteurs pour améliorer la conductivité électronique.

Par exemple, le deuxième additif conducteur AC2 est choisi parmi les noirs de carbones conducteurs, les noirs d'acétylène, les graphites, les graphènes, les nanotubes de carbone, les nanofibres de carbone non activées et un mélange de ceux-ci.

De préférence, le deuxième additif conducteur AC2 comprend un mélange de noirs de carbone et de graphite.

La deuxième composition C2 comprend une teneur en masse en deuxième additif conducteur AC2 inférieure ou égale à 70%.

La teneur en masse en deuxième additif conducteur AC2 dans la deuxième composition C2 est de préférence supérieure ou égale à 20%. Par exemple, la deuxième composition C2 comprend une teneur en masse en deuxième additif conducteur AC2 comprise entre 30% et 60%.

Le deuxième solvant S2 est choisi parmi l'eau, l'éthanol, le butanol, l'alcool isopropylique (aussi appelé isopropanol), l'éther de glycol et un mélange de ceux-ci.

La couche d'interfaçage 20 réalise une interface entre le collecteur de courant 22 et l'électrode 18.

Cela signifie en particulier que la couche d'interfaçage 20 est une couche en contact d'une part avec le collecteur de courant 22 et d'autre part avec l'électrode 18.

Le collecteur de courant 22 présente une épaisseur e22 comprise entre 8 micromètres et 30 micromètres, de préférence comprise entre 12 micromètres et 20 micromètres.

Le collecteur de courant 22 est réalisé en un matériau suffisamment conducteur pour assurer le transport électronique, léger, fin et mécaniquement résistant pour servir de substrat à l'électrode 18.

Par exemple, le collecteur de courant 22 est un feuillard métallique, de préférence un feuillard en aluminium. En variante, le collecteur de courant 22 est réalisé en un alliage de l'aluminium.

Le fonctionnement de l'accumulateur 10 est conforme au fonctionnement d'un accumulateur électrochimique de l'état de la technique.

Le fonctionnement de l'accumulateur 10 selon l'invention est basé sur l'échange réversible d'ions lithium Li⁺ entre la cathode 16 et l'anode 14.

Il est à noter que la couche d'interfaçage 20 améliore l'interface entre le collecteur de courant 22 et l'électrode 18, par optimisation de l'adhésion et de la résistance de contact. La résistance de contact a un effet majeur sur la conductivité électronique de l'ensemble, une forte résistance agissant comme une barrière au transfert des électrons pendant le cycle charge/décharge. La couche d'interfaçage 20 aide à réduire ce phénomène, en améliorant le chemin de conduction.

La couche d'interfaçage 20 protège le collecteur de courant 22 en coupant l'accès de l'électrolyte au collecteur de courant 22.

La couche d'interfaçage 20 agit sur la stabilisation du potentiel de l'interface entre le collecteur de courant 22 et l'électrode 18, comme l'illustrent les résultats de l'expérience 1 détaillés par la suite.

La couche d'interfaçage 20 agit également comme une barrière physique à l'accès des ions responsable de la corrosion.

Lorsque le collecteur de courant 22 est en aluminium, la couche d'interfaçage 20 protège le collecteur de courant 22 de la corrosion en empêchant la formation d'ions Al(OH)₄⁻ ou AlO₂⁻ à la surface de collecteur de courant 22. La formation de tels ions dégrade les performances d'un accumulateur de l'état de la technique en augmentant la résistance électrique d'interface et réagissant avec le matériau d'intercalation MI1 de l'électrode. En l'absence de protection, le feuillard métallique est dégradé en quelques secondes par des solutions alcalines dont le pH dépasse 8,5 à 25°C à 0,1 Mégapascal (MPa).

Par rapport à un accumulateur de l'état de la technique, les performances sont améliorées.

Par ailleurs, la cathode 16 est facile et rapide à fabriquer, ce qui la rend particulièrement adaptée pour une production à grande échelle. Notamment, la première composition C1 est stable, facile et rapide à déposer sur la couche d'interfaçage 20.

L'utilisation d'une cathode 16 à base d'eau réduit les coûts par rapport à une cathode à base organique, notamment en simplifiant les procédés de recyclage et de traitement des déchets, et limitent les risques d'inflammabilité et d'explosion.

La fabrication de la cathode 16 est de mise en oeuvre plus simple par rapport à une cathode de l'état de la technique.

Le procédé de fabrication de la cathode 16, qui va à présent être décrit, est simple à mettre en oeuvre à grande échelle.

Le procédé de fabrication de la cathode 16 comprend une phase de préparation de la première composition C1, une phase de préparation de la deuxième composition C2, une phase de fabrication de la couche d'interfaçage 20 et une phase de fabrication de l'électrode 18.

La phase de fabrication de la couche d'interfaçage 20 comporte une étape de dépôt de la deuxième composition C2 préparée sur un collecteur de courant 22. Le collecteur de courant 22 est préférence un feuillard métallique, notamment un feuillard en aluminium ou en alliage d'aluminium.

Le dépôt de la deuxième composition C2 est mis en oeuvre suivant une technique choisie parmi les techniques d'enduction ou d'impression.

Par exemple, la deuxième composition C2 est déposée sur le collecteur de courant 22 suivant une technique choisie parmi les techniques d'enduction ou d'impression au déroulé par voie humide, notamment la technique d'enduction par racle (aussi désignée par la dénomination anglaise « bare-coater »), la technique d'enduction par filière plate souvent désignée par l'expression anglaise « Slot-Die » signifiant « matrice à fente », les méthodes d'héliogravure, les méthodes de sérigraphie et les méthodes de flexographie.

La phase de fabrication de l'électrode 18 comprend une étape de dépôt de la première composition C1 sur la couche d'interfaçage 20.

Le dépôt de la première composition C1 est mis en oeuvre suivant une technique choisie parmi les techniques d'enduction ou d'impression décrites précédemment.

L'électrode 18 et la cathode 16 sont ainsi obtenues.

La cathode 18 présente ainsi une bonne résistance à la corrosion, tout en présentant des performances électrochimiques satisfaisantes, comme cela va être détaillé à présent dans la section expérimentale.

### SECTION EXPERIMENTALE

L'expérience ci-dessous a été menée sur des échantillons dépourvus de composition de cathode afin d'étudier l'impact de différentes couches d'interfaçage sur les propriétés des échantillons, notamment leur résistance chimique à une composition présentant un pH alcalin.

### Expérience 1

### Matériaux

Dans cette étude, un feuillard d'aluminium (série 1000, épaisseur de 20 micromètres) a été utilisé comme un collecteur de courant.

Six formulations à base de carbone destinées à constituer la couche d'interfaçage ont été préparées.

Les compositions (abrégé en *Comp.)* des différentes formulations testées sont regroupées dans la table 1 ci-dessous.

### [Table 1]

**Table 1 : Compositions des différentes formulations testées, les pourcentages étant exprimés par rapport au poids total de la formulation**

| | Comp. A (comparat ive) | Comp. B (comparat ive) | Comp. C (invention ) | Comp. D (invention ) | Comp. E (invention ) | Comp. F (comparat ive) |
|---|---|---|---|---|---|---|
| Carbone conducteur | 46% | 46% | 46% | 46% | 46% | 46% |
| Polyimide | 54% | 0% | 34% | 48% | 43% | 0% |
| EVOH | 0% | 54% | 20% | 6% | 11% | 0% |
| Polyamide | 0% | 0% | 0% | 0% | 0% | 54% |

Les six formulations ont été enduites avec un applicateur automatique de film sur le feuillard d'aluminium nu pour former sept échantillons. Les conditions thermiques appliquées aux différents collecteurs sont de l'ordre de 1 à 5 min à des températures de 180°C à 220°C. L'épaisseur des couches d'interfaçage après séchage est comprise entre 1 µm et 4 µm telle que reportée dans la table 2.

### Caractérisation

L'adhérence de la couche d'interfaçage sur le feuillard d'aluminium est évaluée en réalisant un test de pelage avec un adhésif Scotch^{™} 2525 de la marque 3M^{™} présentant une largeur de 25 millimètres et une adhérence de 7,5 N/cm (Newton par centimètre). Une bande de l'adhésif est appliquée sur les collecteurs de courant revêtus de couches d'interfaçage, à pression contrôlée. La bande est pelée manuellement selon un angle de 180°. Une méthode similaire est décrite dans la norme AFERA 5001. Le profil de rupture est observé à l'œil nu. Le profil de rupture est évalué sur une échelle de 1 à 4 en fonction de la quantité de revêtement restante sur le substrat. Un niveau de cotation à 4 signifie qu'il n'y a aucun arrachement du revêtement, traduisant une adhérence maximale de la couche d'interfaçage avec le collecteur de courant. Un niveau de cotation à 1 signifie qu'il y a arrachement complet du revêtement, traduisant une adhérence minimale de la couche d'interfaçage avec le collecteur de courant.

La résistance électrique transversale d'un collecteur est évaluée en pressant les collecteurs de courant revêtus ou non de couches d'interfaçage entre deux pastilles conductrices, reliées à un ohmmètre, qui permettent le passage du courant dans le sens transversal du collecteur de courant. La pression appliquée entre les pastilles conductrices est de 0,27 MPa. Plus la résistance électrique transversale est faible, meilleur est le passage du courant.

La résistance du revêtement à l'électrolyte est évaluée sur des échantillons de collecteurs revêtus de couches d'interfaçage de 3 centimètres par 2 centimètres, séchés sous vide puis mis en immersion dans un flacon rempli d'électrolyte formé d'un mélange de carbonate d'éthylène, de carbonate de diméthyle et d'hexafluorophosphate de lithium à 1 mole/litre pendant 72 heures à 60°C. Après immersion, les échantillons subissent un test de frottement manuel pour évaluer la résistance chimique du revêtement. Lorsque le revêtement reste présent sur le collecteur de courant, le niveau de cotation est 4, et lorsque le revêtement s'élimine totalement, le niveau de cotation est à 1.

La résistance chimique alcaline est évaluée en déposant cinq gouttes de soude d'un volume de 500 microlitres chacune sur le collecteur de courant revêtu ou non d'une couche d'interfaçage et correspond au temps au bout duquel les premières bulles apparaissent. L'apparition de bulles indique le début de la réaction d'oxydoréduction entre la soude et l'aluminium, caractérisée par un dégagement de bulles de dihydrogène (H₂).

La solution de soude utilisée simule le contact des électrodes 18 de nature alcaline avec les collecteurs de courant 22 revêtus et permet d'évaluer la propriété des couches d'interfaçage 20 pour protéger les collecteurs de courant de l'alcalinité des électrodes. Par corrélation avec les pH maximums des électrodes aqueuses alcalines, les tests sont réalisés avec de la soude de pH égal à 12 et pH égal à 13.

Les sept échantillons E1 à E7 ont été testés et les résultats sont détaillés dans la table 2 ci-dessous. Un échantillon E0 est dépourvu de couche d'interfaçage et sert de référence pour évaluer l'impact de la couche d'interfaçage sur les différentes propriétés testées.

### [Table 2]

**Table 2 : Etude de l'influence de la couche d'interfaçage sur les propriétés de la cathode**

| | **E0** | **E1** | **E2** | **E3** | **E4** | **E5** | **E6** | **E7** |
|---|---|---|---|---|---|---|---|---|
| Composition de la couche d'interfaçage | / | Comp. A | Comp. B | Comp. B | Comp. C | Comp. D | Comp. E | Comp. F |
| Epaisseur de la couche d'interfaçage (en micromètres) | Non pertinent | 1 à 2 µm | 1 à 2 µm | 4 µm | 1 à 2 µm | 1 à 2 µm | 1 à 2 µm | 1 à 2 µm |
| Adhérence de la couche d'interfaçage (cotation de 1 à 4) | Non pertinent | 2 | 4 | 4 | 4 | 4 | 4 | 4 |
| Résistance électrique transversale (en milliOhm) | Non pertinent | 10 | 5 | 8 à 10 | 5 à 10 | 5 à 10 | 5 à 10 | > 300 |
| Résistance du revêtement à l'électrolyte (cotation de 1 à 4) | Non pertinent | 2 | 4 | 4 | 4 | 3 | 3 | 2 |
| Résistance chimique alcaline à pH 12 | 2 secondes | >1 heure | De 2 à 7 minutes | De 3 à 10 minutes | De 45 minutes à 1 heure | >1 heure | >1 heure | >1 heure |
| Résistance chimique alcaline à pH 13 | 2 secondes | >1 heure | 1 minute | 1 minute | 15 à 30 minutes | 50 minutes | 40 minutes | >1 heure |

### Résultats et discussions

Ces résultats montrent clairement qu'en l'absence de couche d'interfaçage (échantillon E0), le collecteur de courant est immédiatement dégradé par la soude.

La couche d'interfaçage (échantillon E1 à E7) retarde la dégradation du collecteur de courant par la soude pendant au moins une minute à un pH de 13, et pendant au moins plusieurs minutes à un pH de 12.

L'utilisation d'un polyimide dans la composition d'interfaçage (échantillon E1) permet de retarder considérablement la dégradation du collecteur de courant par la soude.

Une couche d'interfaçage contenant un copolymère éthylène-alcool vinylique seul (échantillons E2 et E3) protège le collecteur de courant d'une dégradation alcaline durant au moins une minute. Un tel collecteur de courant revêtu résiste bien à la corrosion induite par l'électrolyte et la résistance électrique est divisée par deux par rapport au collecteur de courant de l'échantillon E1. Le niveau de protection alcaline conférée au collecteur de courant (de l'ordre de la minute) est intéressant pour des procédés de préparation permettant une vitesse d'enduction importante et un temps de séchage court.

Un collecteur de courant revêtu d'une couche d'interfaçage contenant un polyimide et un copolymère éthylène-alcool vinylique (échantillons E4 à E6) présente un temps de résistance à la soude de plusieurs dizaines de minutes, ce qui est compatible avec de nombreux procédés d'enduction. Par ailleurs, les propriétés d'adhérence au métal, de résistance chimique à l'électrolyte et de résistance électrique sont similaires à ceux observés pour les collecteurs de courant revêtu d'une couche d'interfaçage contenant un copolymère éthylène-alcool vinylique seul.

Ces résultats montrent que l'utilisation d'un collecteur de courant revêtu d'une couche d'interfaçage comprenant au moins l'un d'un premier polymère et d'un deuxième polymère tels que définis précédemment protège le collecteur de courant de la corrosion générée lors du dépôt de l'électrode aqueuse sur son support.

La comparaison des échantillons E2 et E3 montre qu'un collecteur réalisé avec un copolymère éthylène-alcool vinylique permet d'obtenir une faible résistance électrique transversale et une bonne résistance chimique à l'électrolyte (au moins 4). Il est également observé des résistances chimiques alcalines supérieures à quelques minutes.

Ainsi, l'emploi d'un copolymère éthylène-alcool vinylique pour réaliser un collecteur de courant revêtu permet d'obtenir un tel collecteur dont les propriétés sont une faible résistance électrique transversale, un haut niveau d'adhérence à l'aluminium et une bonne résistance chimique à l'électrolyte tout en améliorant significativement la résistance chimique alcaline vis-à-vis de l'électrode aqueuse.

L'emploi d'un polyimide en mélange avec un copolymère éthylène-alcool vinylique (échantillon E4 à E6) permet d'obtenir un collecteur de courant revêtu dont les propriétés sont une faible résistance électrique transversale, un haut niveau d'adhérence à l'aluminium et une bonne résistance chimique à l'électrolyte tout en améliorant grandement la résistance chimique alcaline vis-à-vis de l'électrode aqueuse qui permet d'envisager des procéder de dépôt d'électrodes alcalines au-delà d'une minute. Cela confère donc une plus grande flexibilité aux fabricants d'électrode dans la mise au point des procédés d'enduction de composants corrosifs.

Un collecteur de courant revêtu d'une couche d'interfaçage contenant un polyamide (échantillon E7) présente un temps de résistance à la soude, des propriétés d'adhérence au métal et des propriétés de résistance chimique à l'électrolyte comparables à ceux d'un collecteur de courant revêtu d'une couche d'interfaçage contenant un polyimide et un copolymère éthylène-alcool vinylique (échantillons E4 à E6).

En revanche, un tel collecteur (échantillon E7) présente une résistance électrique transversale très élevée qui ne permet pas d'atteindre des performances électriques correctes. Contrairement aux échantillons E1 à E6, l'échantillon E7 ne combine pas à la fois des propriétés de forte résistance alcaline et de faible résistance électrique.

## Revendications

1. Cathode (16) pour accumulateur (10) électrochimique comportant :
- un collecteur de courant (22),
- une couche d'interfaçage (20), la couche d'interfaçage (20) étant enduite sur le collecteur de courant (22), et
- une électrode (18), l'électrode (18) étant formée par dépôt, notamment par enduction, d'une première composition (C1) sur la couche d'interfaçage (20), la première composition (C1) présentant un potentiel hydrogène supérieur ou égal à 10, le potentiel hydrogène étant mesuré à une température de 25°C,
la première composition (C1) étant une composition de cathode à base d'eau comprenant un premier matériau d'intercalation (MI1), un premier matériau liant (ML1) et un premier additif conducteur (AC1),
la couche d'interfaçage (20) étant formée par dépôt, notamment par enduction, sur le collecteur de courant (22) d'une deuxième composition (C2), la deuxième composition (C2) comprenant un deuxième matériau liant (ML2) et un deuxième additif conducteur (AC2),
le deuxième matériau liant (ML2) comprenant un mélange d'un premier polymère et d'un deuxième polymère,
le premier polymère étant choisi parmi les polyimides, les polyamide-imides, les polyéther-imides, et un mélange de ceux-ci, et
le deuxième polymère étant choisi parmi la polyvinylpyrrolidone, les alcools polyvinyliques, les copolymères éthylène-alcool vinylique, l'acide polyacrylique, et un mélange de ceux-ci.

2. Cathode (16) selon la revendication 1, dans laquelle le premier matériau d'intercalation (MI1) est choisi parmi les oxydes de lithium-nickel-cobalt-manganèse, les oxydes de lithium-nickel-cobalt-aluminium et un mélange de ceux-ci, le premier matériau d'intercalation (MI1) étant présent dans la composition sous une forme dissoute.

3. Cathode (16) selon la revendication 1 ou 2, dans laquelle le premier matériau liant (ML1) est choisi parmi les acides polyacryliques, l'alcool polyvinylique, le polyvinylpyrrolidone, l'hydroxypropylcellulose, le polyuréthane, l'alginate de sodium, le styrène-butadiène et un mélange de ceux-ci.

4. Cathode selon l'une quelconque des revendications 1 à 3, dans laquelle la couche d'interfaçage (20) présente une épaisseur (e20) supérieure ou égale à 1 micromètre, de préférence inférieure ou égale à 4 micromètres, préférentiellement inférieure ou égale à 2 micromètres.

5. Cathode selon l'une quelconque des revendications 1 à 4, dans laquelle le collecteur de courant (22) est un feuillard métallique, de préférence un feuillard en aluminium.

6. Accumulateur (10) électrochimique comportant une cathode (16) selon l'une quelconque des revendications 1 à 5.

7. Dispositif de stockage d'énergie comportant un ensemble d'accumulateurs, au moins un accumulateur étant un accumulateur (10) selon la revendication 6.

8. Dispositif de stockage d'énergie selon la revendication 7, le dispositif étant une batterie, de préférence une batterie Lithium-ion.

9. Procédé de fabrication d'une cathode (16) pour accumulateur (10) électrochimique comprenant :
- une étape de préparation d'une première composition (C1), la première composition (C1) présentant un potentiel hydrogène supérieur ou égal à 10, le potentiel hydrogène étant mesuré à une température de 25°C,
- une étape de dépôt, notamment par enduction, de la première composition (C1) sur un substrat formé d'un collecteur de courant (22) et d'une couche d'interfaçage (20), la première composition (C1) étant déposée, notamment enduite, sur la couche d'interfaçage (20), la première composition (C1) étant une composition de cathode à base d'eau comprenant un premier matériau d'intercalation (MI1), un premier matériau liant (ML1) et un premier additif conducteur (AC1),
- une étape de préparation d'une deuxième composition (C2) comprenant la mise en solution d'un deuxième matériau liant (ML2) et d'un deuxième additif conducteur (AC2) dans l'eau, le deuxième matériau liant (ML2) comprenant un mélange d'un premier polymère et d'un deuxième polymère,
le premier polymère étant choisi parmi les polyimides, les polyamide-imides, les polyéther-imides et un mélange de ceux-ci, et
le deuxième polymère étant choisi parmi la polyvinylpyrrolidone, les alcools polyvinyliques, les copolymères éthylène-alcool vinylique, l'acide polyacrylique, et un mélange de ceux-ci, et
- une étape de dépôt, notamment par enduction, de la deuxième composition (C2) sur le collecteur de courant (22) pour former la couche d'interfaçage (20).

## Patentansprüche

1. Kathode (16) für einen elektrochemischen Akkumulator (10), umfassend:
- einen Stromkollektor (22),
- eine Grenzflächenschicht (20), wobei die Grenzflächenschicht (20) auf den Stromabnehmer (22) aufgetragen wird, und
- eine Elektrode (18), wobei die Elektrode (18) durch Aufbringen, insbesondere durch Beschichten, einer ersten Zusammensetzung (C1) auf die Grenzflächenschicht (20) gebildet wird, wobei die erste Zusammensetzung (C1) ein Wasserstoffpotenzial von 10 oder mehr aufweist, wobei das Wasserstoffpotenzial bei einer Temperatur von 25 °C gemessen wird,
wobei die erste Zusammensetzung (C1) eine Kathodenzusammensetzung auf Wasserbasis ist, umfassend ein erstes Einlagerungsmaterial (MI1), ein erstes Bindematerial (ML1) und ein erstes leitendes Additiv (AC1),
die Grenzflächenschicht (20) durch Aufbringen, insbesondere durch Beschichten, einer zweiten Zusammensetzung (C2) auf den Stromabnehmer (22) gebildet wird, die zweite Zusammensetzung (C2) umfassend ein zweites Bindemittelmaterial (ML2) und ein zweites leitendes Additiv (AC2),
das zweite Bindematerial (ML2) umfassend ein Gemisch aus einem ersten Polymer und einem zweiten Polymer,
wobei das erste Polymer ausgewählt ist aus Polyimiden, Polyamidimiden, Polyetherimiden und einem Gemisch davon, und
wobei das zweite Polymer ausgewählt ist aus Polyvinylpyrrolidon, Polyvinylalkoholen, Ethylen-Vinylalkohol-Copolymeren, Polyacrylsäure und einem Gemisch davon.

2. Kathode (16) nach Anspruch 1, wobei das erste Einlagerungsmaterial (MI1) ausgewählt ist aus Lithium-Nickel-Kobalt-Mangan-Oxiden, Lithium-Nickel-Kobalt-Aluminium-Oxiden und einem Gemisch davon, wobei das erste Einlagerungsmaterial (MI1) in der Zusammensetzung in gelöster Form ist.

3. Kathode (16) nach Anspruch 1 oder 2, wobei das erste Bindematerial (ML1) ausgewählt ist aus Polyacrylsäuren, Polyvinylalkohol, Polyvinylpyrrolidon, Hydroxypropylcellulose, Polyurethan, Natriumalginat, Styrol-Butadien und einem Gemisch davon.

4. Kathode nach einem der Ansprüche 1 bis 3, wobei die Grenzflächenschicht (20) eine Stärke (e20) von größer als oder gleich wie 1 Mikrometer, vorzugsweise kleiner als oder gleich wie 4 Mikrometer, bevorzugt kleiner als oder gleich wie 2 Mikrometer, aufweist.

5. Kathode nach einem der Ansprüche 1 bis 4, wobei der Stromabnehmer (22) ein Metallband, vorzugsweise ein Aluminiumband, ist.

6. Elektrochemischer Akkumulator (10), umfassend eine Kathode (16) nach einem der Ansprüche 1 bis 5.

7. Energiespeichervorrichtung, umfassend eine Gruppe von Akkumulatoren, wobei mindestens ein Akkumulator ein Akkumulator (10) nach Anspruch 6 ist.

8. Energiespeichervorrichtung nach Anspruch 7, wobei die Vorrichtung eine Batterie, vorzugsweise eine Lithium-Ionen-Batterie, ist.

9. Verfahren zum Herstellen einer Kathode (16) für einen elektrochemischen Akkumulator (10), umfassend:
- einen Schritt zum Zubereiten einer ersten Zusammensetzung (C1), wobei die erste Zusammensetzung (C1) ein Wasserstoffpotential von 10 oder mehr aufweist, wobei das Wasserstoffpotential bei einer Temperatur von 25 °C gemessen wird,
- einen Schritt zum Aufbringen, insbesondere durch Beschichten, der ersten Zusammensetzung (C1) auf ein Substrat, das aus einem Stromkollektor (22) und einer Grenzflächenschicht (20) gebildet ist, wobei die erste Zusammensetzung (C1) auf die Grenzflächenschicht (20) aufgebracht, insbesondere beschichtet wird, wobei die erste Zusammensetzung (C1) eine Kathodenzusammensetzung auf Wasserbasis ist, die ein erstes Einlagerungsmaterial (MI1), ein erstes Bindematerial (ML1) und ein erstes leitendes Additiv (AC1) umfasst,
- einen Schritt zum Zubereiten einer zweiten Zusammensetzung (C2), bei dem ein zweites Bindematerial (ML2) und ein zweites leitendes Additiv (AC2) in Wasser gelöst werden, das zweite Bindematerial (ML2) umfassend ein Gemisch aus einem ersten Polymer und einem zweiten Polymer,
wobei das erste Polymer ausgewählt ist aus Polyimiden, Polyamidimiden, Polyetherimiden und einem Gemisch davon, und
wobei das zweite Polymer ausgewählt ist aus Polyvinylpyrrolidon, Polyvinylalkoholen, Ethylen-Vinylalkohol-Copolymeren, Polyacrylsäure und einem Gemisch davon, und
- einen Schritt zum Aufbringen, insbesondere durch Beschichten, der zweiten Zusammensetzung (C2) auf den Stromabnehmer (22), um die Grenzflächenschicht (20) zu bilden.

## Claims

1. A cathode (16) for an electrochemical accumulator (10) including:
- a current collector (22),
- an interfacing layer (20), the interfacing layer (20) being coated on the current collector (22), and
- an electrode (18), the electrode (18) being formed by deposition, in particular by coating, of a first composition (C1) on the interfacing layer (20), the first composition (C1) having a potential of hydrogen greater than or equal to 10, the potential of hydrogen being measured at a temperature of 25°C,
the first composition (C1) being a water-based cathode composition comprising a first insertion material (MI1), a first binder material (ML1) and first conductive additive (AC1),
the interfacing layer (20) being formed by deposition, in particular by coating, on the current collector (22) of a second composition (C2), the second composition (C2) comprising a second binder material (ML2) and a second conductive additive (AC2),
the second binder material (ML2) comprising a mixture of a first polymer and a second polymer,
the first polymer being chosen from among polyimides, polyamide-imides, polyether-imides, and a mixture thereof, and
the second polymer being chosen from among polyvinylpyrrolidone, polyvinyl alcohols, ethylene-vinyl alcohol copolymers, polyacrylic acid, and a mixture thereof.

2. The cathode (16) according to claim 1, wherein the first insertion material (MI1) is chosen from among lithium-nickel-cobalt-manganese oxides, lithium-nickel-cobalt-aluminum oxides and a mixture thereof, the first insertion material (MI1) being present in the composition in a dissolved form.

3. The cathode (16) according to claim 1 or 2, wherein the first binder material (ML1) is chosen from among polyacrylic acids, polyvinyl alcohol, polyvinylpyrrolidone, hydroxypropyl cellulose, polyurethane, sodium alginate, styrene-butadiene and a mixture thereof.

4. The cathode according to any of claim 1 to 3, wherein the interfacing layer (20) has a thickness (e20) greater than or equal to 1 micrometer, preferably less than or equal to 4 micrometers, preferably less than or equal to 2 micrometers.

5. The cathode according to any of claim 1 to 4, wherein the current collector (22) is a metallic strip, preferably an aluminum strip.

6. An electrochemical accumulator (10) including a cathode (16) according to any of claims 1 to 5.

7. An energy storage device including a set of accumulators, at least one accumulator being an accumulator (10) according to claim 6.

8. The energy storage device according to claim 7, the device being a battery, preferably a Lithium-ion battery.

9. A method for manufacturing a cathode (16) for an electrochemical accumulator (10) including:
- a step for preparing a first composition (C1), the first composition (C1) having a potential of hydrogen greater than or equal to 10, the potential of hydrogen being measured at a temperature of 25°C, and
- a step for depositing, in particular by coating, the first composition (C1) on a substrate formed by a current collector (22) and an interfacing layer (20), the first composition (C1) being deposited, in particular coated, on the interfacing layer (20), the first composition (C1) being a water-based cathode composition comprising a first insertion material (MI1), a first binder material (ML1) and first conductive additive (AC1),
- a step for preparing a second composition (C2) comprising dissolving a second binder material (ML2) and a second conductive additive (AC2) in water, the second binder material (ML2) comprising a mixture of a first polymer and a second polymer,
the first polymer being chosen from among polyimides, polyamide-imides, polyether-imides, and a mixture thereof, and
the second polymer being chosen from among polyvinylpyrrolidone, polyvinyl alcohols, ethylene-vinyl alcohol copolymers, polyacrylic acid, and a mixture thereof, and
- a step for depositing, in particular by coating, the second composition (C2) on the current collector (22) to form the interfacing layer (20).
